# EUROPÄISCHE PATENTSCHRIFT

(11) **EP 1 686 294 B1**
(45) Veröffentlichungstag und Bekanntmachung des Hinweises auf die Patenterteilung: **19.03.2008**
(21) Anmeldenummer: 05100517.1
(22) Anmeldetag: 27.01.2005
(51) Int. Cl.: F16H 63/32

(54) **Schaltgabel mit Gleitschuhring und entsprechende Gleitschuhanordnung**
Fork with sliding shoe ring and corresponding sliding shoe arrangement
Fourchette munie d'un anneau portant les patins de glissement et arrangement correspondant de patins de glissement

(43) Veröffentlichungstag der Anmeldung: 02.08.2006
(73) Patentinhaber: Getrag Ford Transmissions GmbH, 50735 Köln (DE)
(72) Erfinder: Schwekutsch, Michael, Dr., 45711 Datteln (DE)

(56) Entgegenhaltungen:
- EP-A- 0 479 346
- EP-A- 0 967 419
- DE-A1- 10 207 833
- DE-A1- 19 944 323
- DE-U- 7 105 111
- US-A- 4 630 719

## Beschreibung

Die Erfindung betrifft eine Schaltgabel für das axiale Verschieben einer um eine Achse rotierenden Schaltmuffe in einem Schaltgetriebe. Des weiteren betrifft die Erfindung eine Gleitschuhanordnung für die Schaltgabel.

Aus dem Stand der Technik sind Schaltgabeln bekannt, die zwei sich gegenüberstehende Gabelschenkel aufweisen, die eine halbkreisförmige Innenseite aufspannen. An dieser Innenseite sind in Umfangrichtung zueinander versetzt mehrere Gleitschuhe angeordnet, die mit der Schaltgabel in axialer Richtung formschlüssig verbunden sind. In Gebrauchslage umgreift die Schaltgabel mit den beiden Gabelschenkeln die Schaltmuffe radial von außen, wobei die halbkreisförmige Innenseite einer im wesentlichen zylindrischen Außenseite der Schaltmuffe gegenübersteht. Die Gleitschuhe tauchen dabei in eine nach außen offene Außennut an der Außenseite der Schaltmuffe ein und bilden die Kontaktfläche zwischen Schaltmuffe und Schaltgabel. Durch die in die Außennut greifende Gleitschuhe lässt sich eine axiale Kraft von der Schaltgabel auf die Schaltmuffe übertragen, wenn die Schaltgabel bei einem Schaltvorgang im Schaltgetriebe durch eine Schaltstange oder dergleichen axial verschoben wird. Die Gleitschuhe werden dabei gegen eine Seitenwand der Außennut gedrückt und sind aufgrund der Relativbewegung zwischen der feststehenden Schaltgabel und der Seitenwand, die aufgrund der Drehung der Schaltmuffe an dem Gleitschuh vorbeiläuft, hohen Belastungen ausgesetzt.

Üblicherweise werden die Gleitschuhe auf die Innenseite der Schaltgabel als Kunststoffsteile entweder angespritzt oder aufgesteckt. Beim Angießen der Kunststoffteile kann das Problem bestehen, dass die Fläche, auf die ein Gleitschuh aufgespritzt werden soll, nicht oder nur mit großem Aufwand abgedichtet werden kann. Des weiteren sind die erforderlichen Anspritzformen nur für eine Schaltgabel mit einer Gleitschuhposition für die Kombination mit einer Schaltmuffe nutzbar.

Wenn die Gleitschuhe aufgesteckt werden, ist für deren sichere Fixierung an der Innenseite viel radialer Bauraum notwendig, der in einem Schaltgetriebe oft nicht vorhanden ist. Beispielsweise offenbart die DE 71 05 111 U, die als nächstliegender Stand der Technik gegenüber dem Gegenstand der unabhängigen Ansprüche 1 und 13 angesehen wird, eine Schaltgabel mit einer halbkreisförmigen Innenseite, an der ein im Profil U-förmiger Kunststoffbelag angeordnet ist. Der Kunststoffbelag überdeckt dabei die gesamte halbkreisförmige Innenseite. Das U-förmige Profil überdeckt zudem die stirnseitigen Bereiche der Schaltgabel, mit denen die Schaltgabel in Gebrauchslage in eine Außennut einer Schaltmuffe eintaucht. Somit kann der Kunststoffbelag als eine Vielzahl von einzelnen Gleitschuhen aufgefasst werden, die sich in Umfangsrichtung hintereinander anschließen. Die Gleitschuhe bilden einen Gleitschuhring bzw. der Gleitschuhring verbindet die einzelnen Gleitschuhe, wobei die Gleitschuhe einstückig an dem Gleitschuhring angeformt sind. Die Befestigung des Gleitschuhrings erfolgt durch Sicken, Noppen oder durch eine Kleb- oder Schweißverbindung.

Zudem ist die Flächenpressung der Gleitschuhe aus Kunststoff limitiert. Es werden zwar für die Gleitschuhe auch andere Werkstoffe wie Aluminium- oder Bronze-Legierungen verwendet, die höhere Flächenpressungen dauerhaft vertragen. Diese Werkstoffe lassen sich jedoch nur mit großem Aufwand nachträglich angießen. Auch das nachträgliche Anschrauben oder Anlöten von Bronze- oder Aluminiumgleitschuhen ist mit hohem Aufwand verbunden.

Der US 4 630 719 ist eine Schaltgabel mit halbkreisförmiger Innenseite zu entnehmen, auf die ein ebenfalls halbkreisförmiger Gleitschuhring gesteckt werden kann. Die Befestigung des Gleitschuhrings erfolgt dabei über zwei Drehbolzen, die ein leichtes Kippen des Gleitschuhrings relativ zur Schaltgabel zulassen. Dies führt jedoch aufgrund der vielen Einzelteile zu einem erhöhten Montageaufwand.

Der Erfindung liegt daher die Aufgabe zugrunde, eine Schaltgabel der oben genannten Art bereitzustellen, die einfach herstellbar ist und bei der die Gleitschuhe aus unterschiedlichen Materialen in einfacher oder kostengünstiger Weise an die halbkreisförmige Innenseite angebracht werden können.

Die der Erfindung zugrundeliegende Aufgabe wird dadurch gelöst, dass der Gleitschuhring aufgrund einer Biegesteifigkeit in Umfangsrichtung die Gleitschuhe in radialer Richtung an die Innenseite der Schaltgabel drückt beziehungsweise die Gleitschuhe an der Innenseite der Schaltgabel hält. Durch dieses Halten oder Drücken durch den Gleitschuhring sind die Gleitschuhe in radialer Richtung fixiert. Radial nach außen liegen die Gleitschuhe an der halbkreisförmigen Innenseite der Schaltgabel an, während der vorzugsweise halbkreisförmige Gleitschuhring eine Bewegung der Gleitschuhe in Richtung der Achse der Schaltmuffe nicht zulässt oder dieser entgegenwirkt. Durch diese radiale Fixierung kann eine Verbindung zwischen Gleitschuh und Schaltgabel, um axiale Kräften zwischen Gleitschuh und Schaltgabel zu übertragen, besonders einfach gestaltet werden, da abgesehen von der Umfangsrichtung hier grundsätzlich nur eine axial wirkende Verbindung hergestellt werden muss. Dies wirkt sich kostensenkend auf die Herstellung der Schaltgabel aus.

Des weiteren kann der Gleitschuhring durch eine geeignete Verbindung zwischen Gleitschuhe und Gleitschuhring bewirken, dass die Gleitschuhe auch in Umfangsrichtung, d. h. entlang des Umfangs der halbkreisförmigen Innenseite, zumindest relativ zueinander sich nicht verschieben können. So würde es theoretisch ausreichen, wenn nur einer der Gleitschuhe in Umfangsrichtung fest mit der Innenseite verbunden ist.

In einem bevorzugten Ausführungsbeispiel liegt der Gleitschuhring mit einer Außenseite an der halbkreisförmigen Innenseite der Schaltgabel an. Dabei ist der Gleitschuhring in Umfangsrichtung biegefest mit den Gleitschuhen verbunden. Wird nun ein Gleitschuh, der auf der Innenseite der Schaltgabel anliegt, angehoben, also radial nach innen bewegt, wird der Gleitschuhring entlang seiner Längserstreckung gebogen, was dem Anheben des Gleitschuhs entgegenwirkt. Somit sorgt die Biegesteifigkeit des Gleitschuhrings für die radiale Fixierung der Gleitschuhe. Die Biegesteifigkeit kann über die Auswahl des Materials und über die Gestaltung des Ringprofils variiert werden. Auch kann über die Vorspannung des Gleitschuhrings die Kraft eingestellt werden, die für ein radiales Anheben der Gleitschuhe notwendig wäre.

Um für die Gleitschuhe und/oder für den Gleitschuhring an der Innenseite einen axialen Halt zu schaffen, kann zumindest ein Gabelschenkel an der Innenseite wenigstens einen radial nach innen gerichteten Vorsprung aufweisen. Zweckmäßig ist für jeden Gleitschuh ein radial nach innen gerichteter Vorsprung vorgesehen, um somit in unmittelbarer Nähe des Gleitschuhs ein axiales Widerlager zu bilden.

Der Gleitschuhe kann an einer Seite, die der Innenseite der Schaltgabel zugewandt ist, also an einer radial gesehen äußeren Seite eine Aussparung zur Aufnahme des Vorsprungs aufweisen. Wird der Gleitschuh mit dessen Aussparung auf die Innenseite der Schaltgabel gelegt, wobei der Vorsprung in die Aussparung greift, ist der Gleitschuh in beide axiale Richtungen und in Umfangsrichtung fixiert. Der Gleitschuhring sorgt für die notwendige Spannung, dass der Gleitschuh sich nicht von der Innenseite löst. Ein besonders guter Halt des Gleitschuhrings und damit der Gleitschuhe gibt sich, wenn an der Innenseite wenigstens zwei jeweils nach innen gerichtete Vorsprünge vorgesehen sind, die sich gegenüberstehen und somit einen Winkel von 180 Grad einschließen, wobei jeweils ein Gleitschuh mit einem Vorsprung in Eingriff steht. In diesem Fall sorgt die Biegesteifigkeit des Gleitschuhrings dafür, dass die Gleitschuhe senkrecht auf die halbkreisförmige Innenseite gedrückt werden.

Die Aussparung kann abgerundete Innenkanten aufweisen, die ein Einsetzen des Gleitschuhs in die halbkreisförmige Innenseite mit dem wenigstens einen radial nach innen gerichteten Vorsprung erleichtern. Zum Einsetzen der Gleitschuhe mit dem Gleitschuhring wird der Gleitschuhring zusammengedrückt, so dass sich die Gleitschuhe axial über den radial nach innen gerichteten Vorsprung an der Innenseite schieben lassen. Ist die axial richtige Lage des Gleitschuhrings erreicht, wird der Druck auf die freien Enden des Gleitschuhrings reduziert, wodurch sich der Gleitschuhring radial nach außen öffnet und die Vorsprünge in die Aussparungen der Gleitschuhe greifen.

Vorzugsweise sind in radialer Richtung die Schaltgabel und die Gleitschuhe hinterschneidungsfrei verbunden. Dies bedeutet, dass allein durch den Gleitschuhring die Gleitschuhe in radialer Position gehalten werden. Ohne Gleitschuhring hätten die Gleitschuhe keinen radialen Halt und würden beispielsweise bei der Montage der Schaltgabel aus der halbkreisförmigen Innenseite fallen. In diesem Ausführungsbeispiel sorgt die Verbindung zwischen Gleitschuh und Innenseite, abgesehen von der Auflage in radialer Richtung nach außen, nur für eine axiale Fixierung und für eine Fixierung in Umfangsrichtung.

In einem bevorzugten Ausführungsbeispiel sind Gleitschuhe und der Gleitschuhring einstückig als Gussteil ausgebildet. Gleitschuhe und Gleitschuhring werden in einem Fertigungsschritt hergestellt, eine Verbindung zwischen Gleitschuhen und Gleitschuhring wird somit während dieses Fertigungsschritts hergestellt.

Der Gleitschuhring mit den daran angeformten Gleitschuhen kann aus Kunststoff oder einer Aluminium- oder Bronze-Legierung sein. Die Auswahl des geeigneten Werkstoffes hängt dabei von der gewünschten Gleitpaarung zwischen Gleitschuh und der Seitenwand der Außennut der Schaltmuffe ab. Jedoch kann durch die Werkstoffauswahl auch die Biegesteifigkeit des Ringes gezielt beeinflusst werden.

Eine andere Möglichkeit, die Biegesteifigkeit des Gleitschuhrings zu beeinflussen, liegt in der Dimensionierung oder Auslegung des Ringprofils. Dabei wirkt sich auf die Biegesteifigkeit eine Vergrößerung der Höhe des Ringprofils in radialer Richtung wesentlich stärker aus als eine Vergrößerung der axialen Ausdehnung des Ringprofils. In einem bevorzugten Ausführungsbeispiel ist das Ringprofil rechteckig, wobei die Außenseite des Gleitschuhrings plan auf der zylindrischen Innenfläche der Schaltgabel aufliegt. Es sind weitere Ringprofile denkbar, bei denen die Außenseite plan auf der Innenseite der Schaltgabel anliegt. Beispielsweise könnte das Ringsprofil T-förmig oder I-förmig (Doppel-T) sein.

Um die Herstellungskosten niedrig zu halten, kann die Schaltgabel ein Blechumformteil sein. Ein nach innen ragender Vorsprung kann in diesem Ausführungsbeispiel vorzugsweise als eine Einprägung oder eine Blechdurchstellung ausgebildet sein.

Um etwaige Formabweichungen oder Schiefstellungen der beiden sich gegenüberstehenden Gabelschenkeln auszugleichen, können die Gleitschuhe mit unterschiedlichem axialen Versatz mit dem Gleitschuhring verbunden sein. Durch den unterschiedlichen Versatz können die einzelnen Gleitschuhe in einer Ebene liegen, um exakt in die rotierende Außennut der Schaltmuffe zu greifen, auch wenn die Gabelschenkel zueinander verwinkelt sind. Damit lassen sich in einfacher Weise Fertigungstoleranzen nicht gerichteter Gabelschenkel ausgleichen. Durch farbliche Markierungen an dem Gleitschuhring kann der Versatz jedes Gleitschuhs angezeigt werden (positiver oder negativer Versatz bzw. Ausmaß des Versatzes

Die Erfindung betrifft auch eine Gleitschuhanordnung mit wenigstens zwei Gleitschuhen für eine Schaltgabel, insbesondere für eine Schaltgabel der oben beschriebenen Art in ihren verschiedenen Ausführungsformen. Die Gleitschuhanordnung zeichnet sich dadurch aus, dass der Gleitschuhring aufgrund seiner Biegesteifigkeit die Gleitschuhe in radialer Richtung an der Innenseite der Schaltgabel hält beziehungsweise an die Innenseite der Schaltgabel drückt.

Anhand der in den Figuren dargestellten Ausführungsbeispiele wird die Erfindung näher erläutert. Es zeigen:
- Figur 1: eine Schaltgabel ohne Gleitschuhe in perspektivischer Ansicht;
- Figur 2: die Schaltgabel der Figur 1 in einer Seitenansicht;
- Figur 3: einen Gleitschuhring in perspektivischer Ansicht; und
- Figur 4: den Gleitschuhring der Figur 3 in der Seitenansicht.

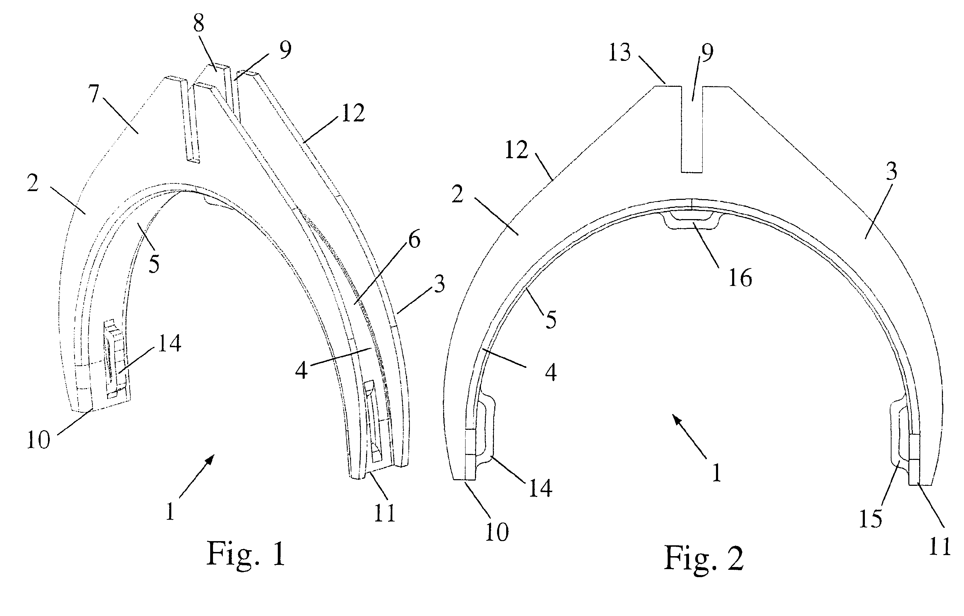

Die Figuren 1 und 2 zeigen eine Schaltgabel, die in ihrer Gesamtheit mit 1 bezeichnet wird. Die Schaltgabel 1 umfasst einen ersten Gabelschenkel 2 und einen zweiten Gabelschenkel 3, die einen Halbring 4 mit einer halbzylindrischen Innenseite 5 und einer halbzylindrischen Außenseite 6 bilden. An den Halbring 4 angeformt sind zwei zueinander axial beabstandete und gleich ausgebildete Stirnwände 7, 8, die sich jeweils von dem Halbring 4 im rechten Winkel radial nach außen erstrecken. Die Stirnwand 7, 8 weist jeweils eine Schlitzartige Aufnahme 9 für eine nicht dargestellte Schaltstange auf, durch die die Schaltgabel 1 in axilaler Richtung geführt werden kann. Von freien Enden 10, 11 der Gabelschenkel zu der mittig angeordeten schlitzartigen Aufnahme 9 steigt die Höhe der Stirnwand 7, 8, gerechnet von dem Halbring 4 in radialer Richtung an, so dass eine Außenkante 12 der Stirnwand 7, 8 nicht kreisförmig ist. Unmittelbar in der Nähe der schlitzartigen Aufnahme weisen die Stirnwände eine Abflachung 13 auf.

Der Halbring 4 weist an den freien Enden 10, 11 jeweils eine radial nach innen gerichtete Einprägung oder Blechdurchstellung 14, 15 auf. Unterhalb der schlitzartigen Aufnahme 9 ist ebenfalls eine Blechdurchstellung 16 vorgesehen, so dass die Blechdurchstellungen 14, 15, 16 um 90 Grad versetzt an der Innenseite 5 des Halbrings 4 angeordnet sind. Die Blechdurchstellungen 14, 15 stehen sich im Winkel von 180 Grad gegenüber.

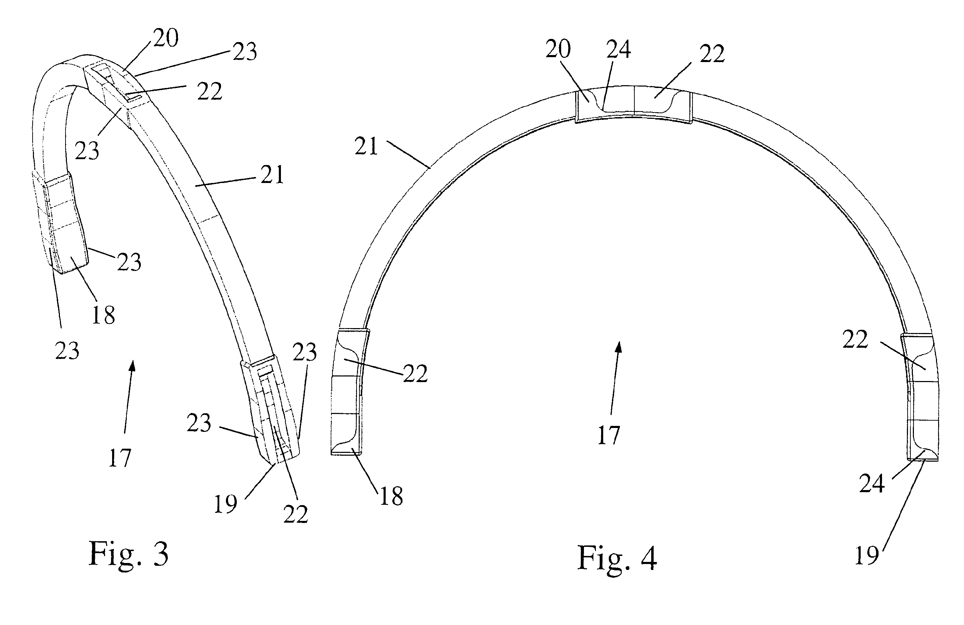

Die Figuren 3 und 4 zeigen einen Gleitschuhring 17 in Form eines Halbrings. Der Gleitschuhring 17 verbindet drei Gleitschuhe 18, 19, 20, die voneinander in Umfangsrichtung um 90 Grad versetzt angeordnet sind. Der Durchmesser des Gleitschuhrings entspricht in etwa dem Durchmesser des Halbrings 4, so dass in montierter Stellung eine halbzylindrische Außenseite 21 des Gleitschuhrings 17 an der Innenseite des Halbrings 4 anliegt. Dabei greifen die Blechdurchstellungen 14, 15, 16 in entsprechende Aussparungen 22 in den Gleitschuhen 18, 19, 20. Ein Herausfallen des Gleitschuhrings 17 aus dem Halbring 4 wird dadurch verhindert, dass in montierter Stellung der Gleitschuhring 17 radial gegen die Innenseite 5 gedrückt wird, wobei insbesondere die sich gegenüberstehenden Blechdurchstellungen 14, 15 im Eingriff stehen mit den Gleitschuhen 19, 20.

Das Profil des Gleitschuhrings 17 ist rechteckig. Gegenüber dem Profil sind die Gleitschuhe 19, 20, 21 in axialer Richtung leicht abgesetzt, wodurch seitliche Gleitflächen 23 gebildet werden. Wie der Figur 3 zu entnehmen ist, sind die einzelnen Gleitschuhe 18, 19, 20 ohne axialen Versatz mit dem Gleitschuhring 17 verbunden.

Die Aussparungen 22 sind der Form der Blechdurchstellungen 14, 15, 16 angepasst und weisen abgerundete und gebogene Innenkanten sind 24 auf. Dies vereinfacht ein Einsetzen des Gleitschuhrings 17 in den Halbring 4.

In Gebrauchslage greift die Schaltgabel 1 mit dem eingesetzten Gleitschuhring um eine Schaltmuffe (nicht dargestellt), die an ihrer zylindrischen Umfangsfläche eine umlaufende Außennut aufweist. Dabei tauchen die Gleitschuhe 18, 19, 20 in die Au-ßennut ein. Dreht sich die Schaltmuffe, laufen ringförmige Seitenwände der Außennut an den feststehenden Gleitschuhen vorbei. Wird die Schaltgabel in axialer Richtung bewegt, drücken die Gleitschuhe 18, 19, 20 mittels der Gleitfläche 23 und der Seitenwand der Außennut die Schaltmuffe in eine entsprechend axiale Richtung.

Ein Demontieren des Gleitschuhrings mit den daran einstückig angeformten Gleitschuhen ist ohne weiteres möglich. Dafür muss lediglich die Kraft überwunden werden, mit der der Gleitschuhring 17 gegen die Innenseite 5 drückt beziehungsweise die Kraft, um den Gleitschuhring soweit zusammenzudrücken, dass die Blechdurchstellungen 14, 15 nicht mehr in die entsprechenden Aussparungen 21 der Gleitschuhe 18, 19 greifen und der Gleitschuhring 17 aus dem Halbring 4 gezogen werden kann.

### Bezugszeichenliste

- 1: Schaltgabel
- 2: Erster Gabelschenkel
- 3: Zweiter Gabelschenkel
- 4: Halbring
- 5: Innenseite
- 6: Außenseite
- 7: Stirnwand
- 8: Stirnwand
- 9: Aufnahme
- 10: Freies Ende
- 11: Freies Ende
- 12: Außenkante
- 13: Abflachung
- 14: Blechdurchstellung
- 15: Blechdurchstellung
- 16: Blechdurchstellung
- 17: Gleitschuhring
- 18: Gleitschuh
- 19: Gleitschuh
- 20: Gleitschuh
- 21: Außenseite
- 22: Aussparung
- 23: Gleitfläche
- 24: Innenkante

## Patentansprüche

1. Schaltgabel (1) für das axiale Verschieben einer um eine Achse rotierenden Schaltmuffe in einem Schaltgetriebe, mit zwei sich gegenüberstehenden Gabelschenkeln (2, 3), die eine halbkreisförmige Innenseite (5) aufspannen, und mit wenigstens zwei Gleitschuhen (18, 19), die an der halbkreisförmigen Innenseite in Umfangsrichtung zueinander versetzt angeordnet sind und mit den Gabelschenkeln (2, 3) in axialer Richtung formschlüssig verbunden sind, wobei in Gebrauchslage die Schaltgabel (1) mit den Gabelschenkeln (2, 3) die Schaltmuffe radial von außen umgreift und die Gleitschuhe (18, 19) in eine Außennut der Schaltmuffe eintauchen, wodurch die Schaltmuffe in axialer Richtung durch die Schaltgabel (1) betätigbar ist und wobei die Gleitschuhe (18, 19) durch einen Gleitschuhring (17) miteinander verbunden sind, **dadurch gekennzeichnet, dass** der Gleitschuhring (17) aufgrund einer Biegesteifigkeit in Umfangsrichtung die Gleitschuhe (18, 19) in radialer Richtung an die Innenseite (5) der Schaltgabel drückt.

2. Schaltgabel (1) nach Anspruch 1, **dadurch gekennzeichnet, dass** der Gleitschuhring (17) mit einer Außenseite (21) an der Innenseite (5) der Schaltgabel (1) anliegt.

3. Schaltgabel (1) nach Anspruch 1 oder 2, **dadurch gekennzeichnet, dass** zumindest einer der Gabelschenkel (2, 3) an der Innenseite (5) wenigstens einen radial nach innen gerichtete Vorsprung (14, 15, 16) aufweist.

4. Schaltgabel (1) nach Anspruch 3, **dadurch gekennzeichnet, dass** wenigstens einer der Gleitschuhe (18, 19) an einer zur Innenseite (5) der Schaltgabel (1) zugewandten Seite eine Aussparung (22) zur Aufnahme des Vorsprungs (14, 15, 16) aufweist.

5. Schaltgabel (1) nach Anspruch 4, **dadurch gekennzeichnet, dass** die Aussparung (22) abgerundete Innenkanten (24) aufweist.

6. Schaltgabel (1) nach einem der Ansprüche 1 bis 5, **dadurch gekennzeichnet, dass** in radialer Richtung die Innenseite (5) und Gleitschuhe (18, 19, 20) hinterschneidungsfrei verbunden sind.

7. Schaltgabel (1) nach einem der Ansprüche 1 bis 6, **dadurch gekennzeichnet, dass** die Gleitschuhe (18, 19, 20) und der Gleitschuhring (17) einstückig als Gussteil ausgebildet sind.

8. Schaltgabel (1) nach einem der Ansprüche 1 bis 7, **dadurch gekennzeichnet, dass** der Gleitschuhring (17) aus Kunststoff, Aluminium und/oder Bronze ist.

9. Schaltgabel (1) nach einem der Ansprüche 1 bis 8, **dadurch gekennzeichnet, dass** das Profil des Gleitschuhrings (17) rechteckig ist.

10. Schaltgabel (1) nach einem der Ansprüche 1 bis 9, **dadurch gekennzeichnet, dass** die Schaltgabel (1) ein Blechumformteil ist.

11. Schaltgabel (1) nach Anspruch 3 und 10, **dadurch gekennzeichnet, dass** der Vorsprung in Form einer Einprägung oder Blechdurchstellung (14, 15, 16) ausgebildet ist.

12. Schaltgabel (1) nach einem der Ansprüche 1 bis 11, **dadurch gekennzeichnet, dass** die einzelnen Gleitschuhe (18, 19, 20) mit unterschiedlichem axialen Versatz mit dem Gleitschuhring (17) verbunden sind.

13. Gleitschuhanordnung mit wenigstens zwei Gleitschuhen (18, 19, 20) für eine Schaltgabel (1), die zur axialen Verschiebung einer um eine Achse rotierenden Schaltmuffe dient, insbesondere für eine Schaltgabel (1) nach einen der Ansprüche 1 bis 10, wobei die Schaltgabel (1) zwei sich gegenüberstehende Gabelschenkel (2, 3) aufweist, die eine halbkreisförmige Innenseite (5) aufspannen, auf der in Gebrauchslage die Gleitschuhe (18, 19, 20) in Umfangsrichtung voneinander beabstandet angeordnet sind und in axiale Richtung formschlüssig mit den Gabelschenkeln (2, 3) verbindbar sind, um in eine Außennut der Schaltmuffe zu greifen, und wobei die Gleitschuhanordnung einen Gleitschuhring (17) umfasst, der die Gleitschuhe (18, 19, 20) miteinander verbindet, **dadurch gekennzeichnet, dass** der Gleitschuhring (17) aufgrund seiner Biegesteifigkeit in Umfangsrichtung diese in radialer Richtung an die Innenseite (5) der Schaltgabel drücken kann.

## Claims

1. Shift fork (1) for the axial movement of a shift sleeve, which rotates around an axle, in a shift transmission, having two opposite fork limbs (2, 3) which span a semi-circular inner side (5), and having at least two sliding shoes (18, 19) which are arranged on the semi-circular inner side so as to be offset with respect to one another in the peripheral direction and are connected in a form-fitting manner in the axial direction to the fork limbs (2, 3), wherein in the use position the shift fork (1) engages with the fork limbs (2, 3) around the shift sleeve radially from the outside, and the sliding shoes (18, 19) dip into an outer groove of the shift sleeve, as a result of which the shift sleeve can be actuated in the axial direction by the shift fork (1) and with the sliding shoes (18, 19) being connected to one another by means of a sliding shoe ring (17), **characterized in that** the sliding shoe ring (17), on account of a bending stiffness in the peripheral direction, presses the sliding shoes (18, 19) in the radial direction against the inner side (5) of the shift fork.

2. Shift fork (1) according to Claim 1, **characterized in that** the sliding shoe ring (17) bears with an outer side (21) against the inner side (5) of the shift fork (1).

3. Shift fork (1) according to Claim 1 or 2, **characterized in that** at least one of the shift forks (2, 3) has, on the inner side (5), at least one radially inwardly aligned projection (14, 15, 16).

4. Shift fork (1) according to Claim 3, **characterized in that** at least one of the sliding shoes (18, 19) has, on a side facing towards the inner side (5) of the shift fork (1), a cutout (22) for receiving the projection (14, 15, 16).

5. Shift fork (1) according to Claim 4, **characterized in that** the cutout (22) has rounded inner edges (24).

6. Shift fork (1) according to one of Claims 1 to 5, **characterized in that**, in the radial direction, the inner side (5) and sliding shoes (18, 19, 20) are connected without an undercut.

7. Shift fork (1) according to one of Claims 1 to 6, **characterized in that** the sliding shoes (18, 19, 20) and the sliding shoe ring (17) are formed in one piece as a cast part.

8. Shift fork (1) according to one of Claims 1 to 7, **characterized in that** the sliding shoe ring (17) is composed of plastic, aluminium and/or bronze.

9. Shift fork (1) according to one of Claims 1 to 8, **characterized in that** the profile of the sliding shoe ring (17) is rectangular.

10. Shift fork (1) according to one of Claims 1 to 9, **characterized in that** the shift fork (1) is a shaped sheet-metal part.

11. Shift fork (1) according to Claims 3 and 10, **characterized in that** the projection is formed in the manner of an embossing or sheet-metal punched-through portion (14, 15, 16).

12. Shift fork (1) according to one of Claims 1 to 11, **characterized in that** the individual sliding shoes (18, 19, 20) are connected to the sliding shoe ring (17) with different axial offset.

13. Sliding shoe arrangement having at least two sliding shoes (18, 19, 20) for a shift fork (1) which serves for the axial movement of a shift sleeve which rotates around an axle, in particular for a shift fork (1) according to one of Claims 1 to 10, with the shift fork (1) having two opposite fork limbs (2, 3) which span a semi-circular inner side (5), on which semi-circular inner side (5), in the use position, the sliding shoes (18, 19, 20) are arranged so as to be spaced apart with respect to one another in the peripheral direction and can be connected in a form-fitting manner in the axial direction to the fork limbs (2, 3) in order to engage into an outer groove of the shift sleeve, and with the sliding shoe arrangement comprising a sliding shoe ring (17) which connects the sliding shoes (18, 19, 20) to one another, **characterized in that** the sliding shoe ring (17), on account of its bending stiffness in the peripheral direction, can press said sliding shoes (18, 19, 20) in the radial direction against the inner side (5) of the shift fork.

## Revendications

1. Fourchette de boîte de vitesses (1) pour le déplacement axial d'un manchon de boîte de vitesses tournant autour d'un axe dans une boîte de vitesses, comprenant deux branches de fourchette (2, 3) opposées l'une à l'autre qui entourent un côté intérieur (5) en forme de demi-cercle, et comprenant au moins deux patins de glissement (18, 19) qui sont disposés sur le côté intérieur en forme de demi-cercle décalés l'un par rapport à l'autre dans le sens du pourtour et avec lesquels les branches de fourchette (2, 3) sont reliées par engagement géométrique dans le sens axial, la fourchette de boîte de vitesses (1) en position d'utilisation entourant le manchon de boîte de vitesses avec les branches de fourchette (2, 3) dans le sens radial par l'extérieur et les patins de glissement (18, 19) pénétrant dans une rainure extérieure du manchon de boîte de vitesses, ce qui permet au manchon de boîte de vitesses d'être actionné dans le sens axial par la fourchette de boîte de vitesses (1) et les patins de glissement (18, 19) étant reliés entre eux par une bague de patin de glissement (17), **caractérisée en ce que** la bague de patin de glissement (17), grâce à une rigidité à la flexion dans le sens du pourtour, pousse les patins de glissement (18, 19) dans le sens radial sur le côté intérieur (5) de la fourchette de boîte de vitesses.

2. Fourchette de boîte de vitesses (1) selon la revendication 1, **caractérisée en ce que** la bague de patin de glissement (17) repose avec un côté extérieur (21) sur le côté intérieur (5) de la fourchette de boîte de vitesses (1).

3. Fourchette de boîte de vitesses (1) selon la revendication 1 ou 2, **caractérisée en ce qu'**au moins l'une des branches de fourchette (2, 3) présente sur le côté intérieur (5) au moins un élément en saillie (14, 15, 16) dirigé vers l'intérieur dans le sens radial.

4. Fourchette de boîte de vitesses (1) selon la revendication 3, **caractérisée en ce qu'**au moins l'un des patins de glissement (18, 19) présente sur un côté faisant face au côté intérieur (5) de la fourchette de boîte de vitesses (1) un creux (22) destiné à accueillir l'élément en saillie (14, 15, 16).

5. Fourchette de boîte de vitesses (1) selon la revendication 4, **caractérisée en ce que** le creux (22) présente des bords intérieurs (24) arrondis.

6. Fourchette de boîte de vitesses (1) selon l'une des revendications 1 à 5, **caractérisée en ce que** le côté intérieur (5) et les patins de glissement (18, 19, 20) sont reliés dans le sens radial sans contre-dépouille.

7. Fourchette de boîte de vitesses (1) selon l'une des revendications 1 à 6, **caractérisée en ce que** les patins de glissement (18, 19, 20) et la bague de patin de glissement (17) sont réalisés d'une seule pièce sous la forme d'une pièce coulée.

8. Fourchette de boîte de vitesses (1) selon l'une des revendications 1 à 7, **caractérisée en ce que** la bague de patin de glissement (17) est en matière plastique, en aluminium et/ou en bronze.

9. Fourchette de boîte de vitesses (1) selon l'une des revendications 1 à 8, **caractérisée en ce que** le profil de la bague de patin de glissement (17) est rectangulaire.

10. Fourchette de boîte de vitesses (1) selon l'une des revendications 1 à 9, **caractérisée en ce que** la fourchette de boîte de vitesses (1) est une pièce façonnée en tôle.

11. Fourchette de boîte de vitesses (1) selon les revendications 3 et 10, **caractérisée en ce que** l'élément en saillie est réalisé sous la forme d'un estampage ou d'une passe de tôle (14, 15, 16).

12. Fourchette de boîte de vitesses (1) selon l'une des revendications 1 à 11, **caractérisée en ce que** les patins de glissement (18, 19, 20) individuels sont reliés avec la bague de patin de glissement (17) avec des décalages axiaux différents.

13. Arrangement de patins de glissement comprenant au moins deux patins de glissement (18, 19, 20) pour une fourchette de boîte de vitesses (1) qui sert au déplacement axial d'un manchon de boîte de vitesses tournant autour d'un axe, notamment pour une fourchette de boîte de vitesses (1) selon l'une des revendications 1 à 10, la fourchette de boîte de vitesses (1) présentant deux branches de fourchette (2, 3) opposées l'une à l'autre qui entourent un côté intérieur (5) en forme de demi-cercle sur lequel, en position d'utilisation, les patins de glissement (18, 19, 20) sont disposés espacés l'un de l'autre dans le sens du pourtour et peuvent être reliés par engagement géométrique dans le sens axial avec les branches de fourchette (2, 3) afin de venir en prise dans une rainure extérieure du manchon de boîte de vitesses, et l'arrangement de patins de glissement comprenant une bague de patin de glissement (17) qui relie entre eux les patins de glissement (18, 19, 20), **caractérisé en ce que** la bague de patin de glissement (17), grâce à sa rigidité à la flexion dans le sens du pourtour, peut pousser ceux-ci dans le sens radial sur le côté intérieur (5) de la fourchette de boîte de vitesses.
